# EUROPEAN PATENT SPECIFICATION

(11) **EP 4 180 268 B1**
(45) Date of publication and mention of the grant of the patent: **04.09.2024**
(21) Application number: 22206919.7
(22) Date of filing: 11.11.2022
(51) Int. Cl.: B60N 2/28

(54) **DEVICE FOR ANCHORING ACCOMMODATIONS FOR CHILDREN AND/OR INFANTS TO A SEAT OF A VEHICLE**
VORRICHTUNG ZUR VERANKERUNG VON UNTERKUNFTEN FÜR KINDER UND/ODER KLEINKINDER AN EINEM SITZ EINES FAHRZEUGS
DISPOSITIF D'ANCRAGE D'ACCESSOIRES POUR ENFANTS ET/OU ENFANTS SUR UN SIÈGE DE VÉHICULE

(30) Priority: 16.11.2021 IT 202100028958
(43) Date of publication of application: 17.05.2023
(73) Proprietor: L'Inglesina Baby S.p.A., 36077 Altavilla Vicentina (VI) (IT)
(72) Inventor: TOMASI, Ivan, 36051 CREAZZO VI (IT); BARETTA, Dario, 30032 FIESSO D'ARTICO VE (IT)
(74) Representative: Modiano, Micaela Nadia

(56) References cited:
- JP-A- 2014 133 548

## Description

The present invention relates to a device for anchoring accommodations for children and/or infants to a seat of a vehicle.

Child seats are known and widely used, and their use has now been mandatory for some time when it is desired to transport children in cars.

Such child seats are usually constituted by a seat structure (or carry cot) inside which the child can be accommodated; the seat structure can be anchored, using devices of various kinds, to the seats of the car so as to ensure that, during the trip, the seat (and as a consequence the child) is stably integral with the seat.

To simplify the operations to fasten and unfasten the seat to (and from) the seat of the car, child car seats have been provided which can be associated with what is known as a "car base", which constitutes a form of interface between the seat of the car and the seat structure.

Basically, the car base is fixed directly to the seat with fixing devices associated with the seats themselves (such as, for example, the automatic fastening means known commercially as ISO-FIX) while the seat structure is fastened (or unfastened) directly to/from the car base, so that the child can be carried by hand or transported on a buggy.

It seems evident that the use of child seats associated with the car base has facilitated the fastening/unfastening operations, by making such operations intuitive and less arduous.

In the vast majority of cases, however, if it is desired to fix the carriage body of a pram to the seat, use is made of the seat belts of the seats of the car, but such anchoring is not so secure, and the related fastening and unfastening operations are quite laborious.

Solutions have been proposed however in which the carriage body is fitted with means of fastening directly to the car base, so as to appreciably increase safety in the event of an impact and to facilitate the fastening and unfastening maneuvers by the user.

However, in the known solutions a certain difficulty is encountered in the fastening and unfastening operations, in that the mutual fastening means that are provided on the car base and on the carriage body require a movement in the vertical direction, sometimes combined with a movement in the horizontal direction, which is quite inconvenient to perform from outside of the vehicle.

Devices are likewise known in which the accommodations (typically carrycots or child seats, but in some cases also carriage bodies) are coupled to and decoupled from the car base with a purely translational movement, substantially on a horizontal plane.

In this regard see the patent GB2429637, the patent US6283545, the patent application US2004239079, or the patent applications WO2016/001387 and WO2017/118667 or JP 2014133548.

Such conventional solutions have some drawbacks, however.

Specifically, it is an extremely complex matter to design a single car base that is provided with means for fastening and for coupling which are configured to receive child seats, carrycots and also carriage bodies.

In many cases, every car base needs various types of fastening means, which are selectively engageable by corresponding engagement means with which the accommodation to be fastened are provided.

Furthermore, since carriage bodies are typically fastened to car bases at a front or rear region with respect to their longitudinal extension, it is necessary to appreciably weight and stiffen the structure of the carriage body in order to prevent an excessive deformation thereof during impacts.

The aim of the present invention is to provide a device for anchoring accommodations for children and/or infants to a seat of a vehicle that is capable of improving the known art in one or more of the above mentioned aspects.

Within this aim, an object of the invention is to provide a device for anchoring accommodations for children and/or infants to a seat of a vehicle that makes it possible to render the fastening and unfastening of carriage bodies extremely easy.

Another object of the invention is to devise a device for anchoring accommodations for children and/or infants to a seat of a vehicle that makes it possible to appreciably contain the weight of the carriage body, while ensuring a high standard of safety in the event of impacts.

Another object of the invention is to provide a device for anchoring accommodations for children and/or infants to a seat of a vehicle that is highly reliable, easy to implement and of low cost.

This aim and these and other objects which will become better apparent hereinafter are achieved by a device for anchoring accommodations for children and/or infants to a seat of a vehicle according to claim 1, optionally provided with one or more of the characteristics of the dependent claims.

Further characteristics and advantages of the invention will become better apparent from the description of some preferred, but not exclusive, embodiments of the device for anchoring accommodations for children and/or infants to a seat of a vehicle according to the invention, which are illustrated for the purposes of non-limiting example in the accompanying drawings wherein:

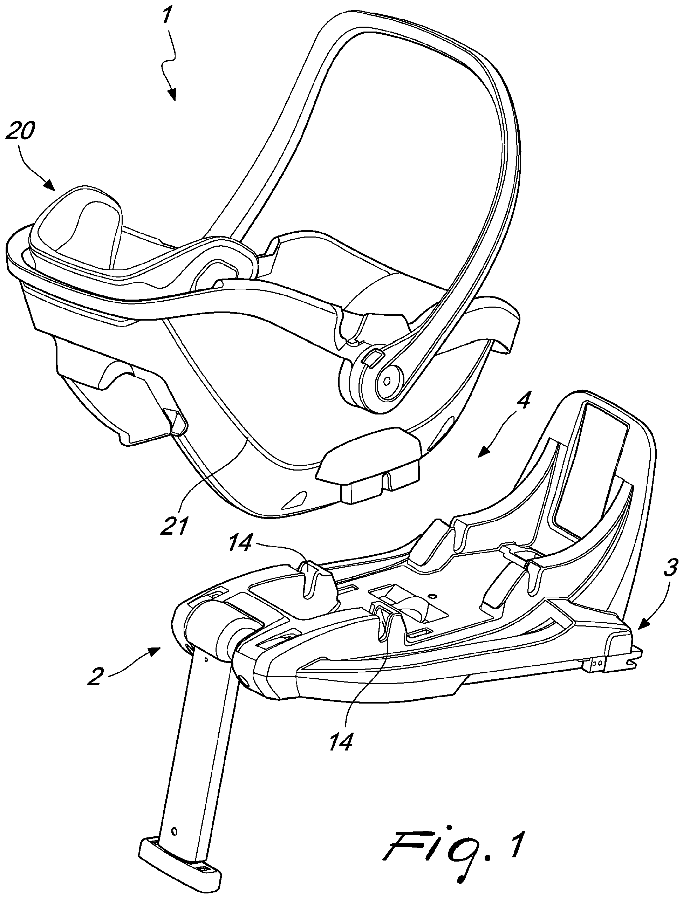

Figure 1 is a perspective view of the device according to the invention, and in particular of the car base of the device during the step of coupling with a carrycot;

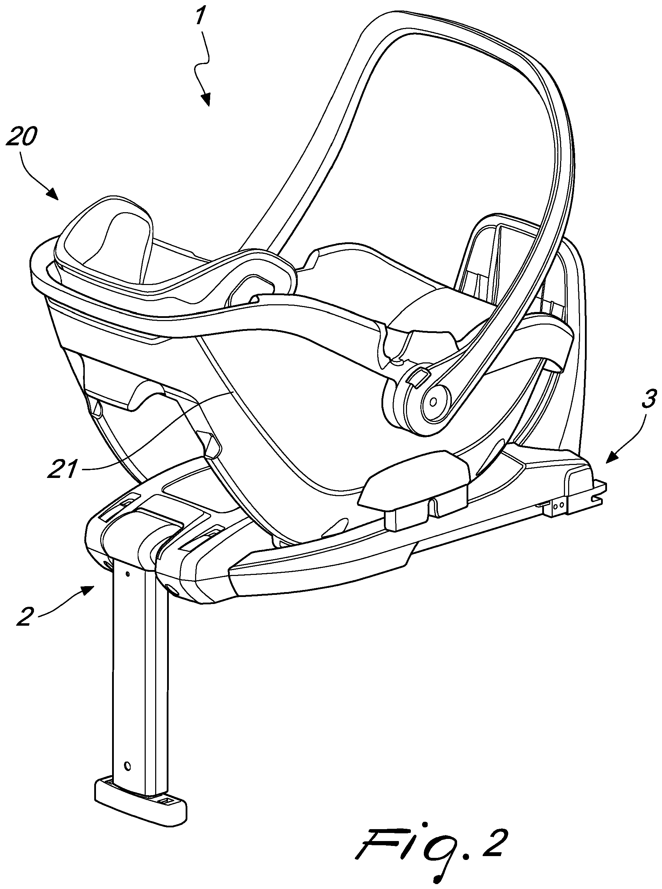

Figure 2 is a perspective view of the device according to the invention, and in particular of the car base stably coupled with a carrycot;

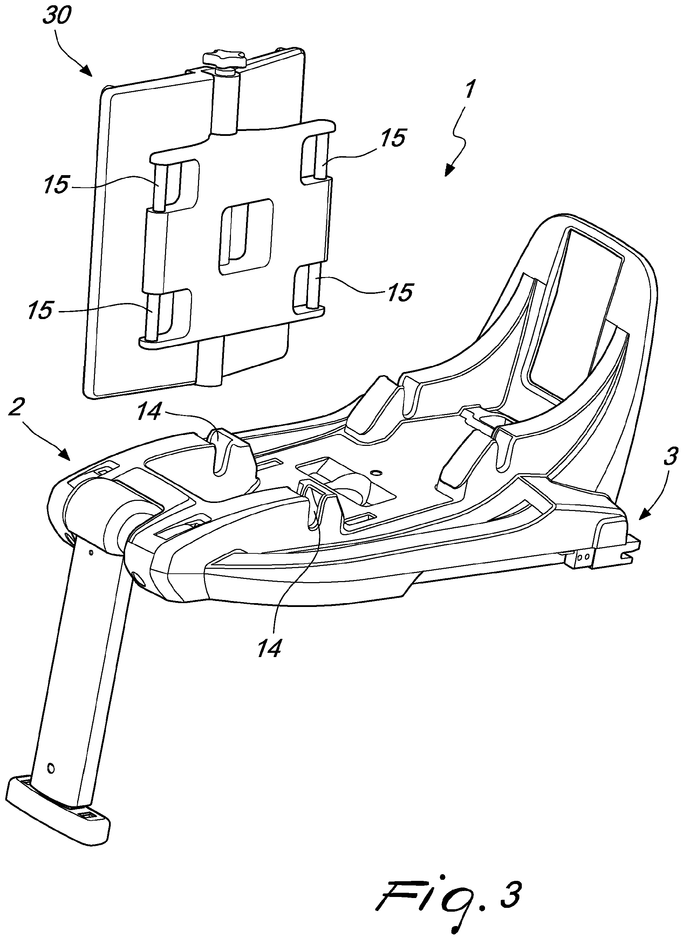

Figure 3 is a perspective view of the device according to the invention, and in particular of the car base during the step of coupling with the interface body;

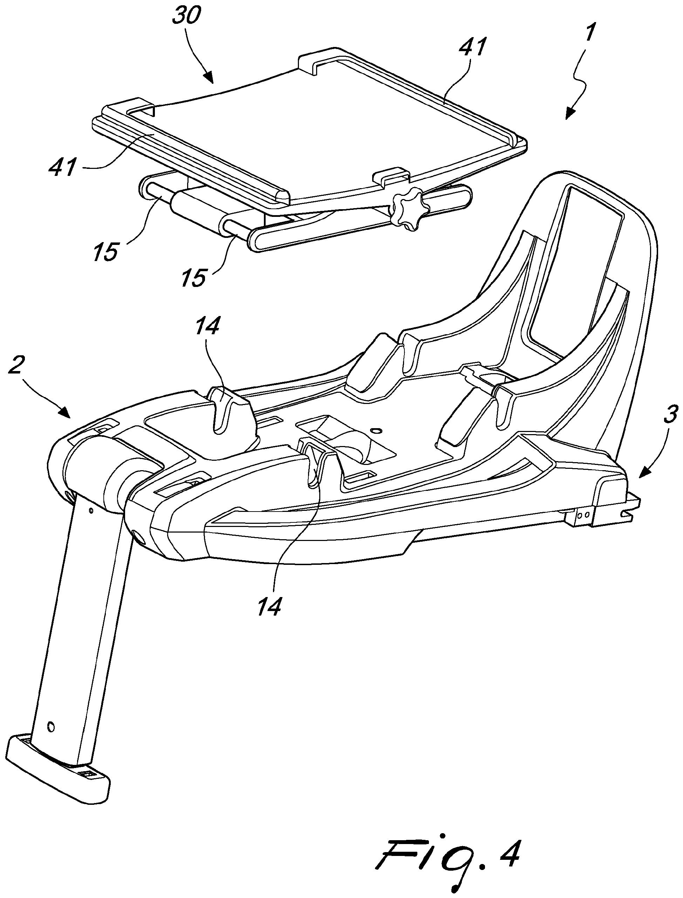

Figure 4 is another perspective view of the device according to the invention, and in particular of the car base during the step of coupling with the interface body;

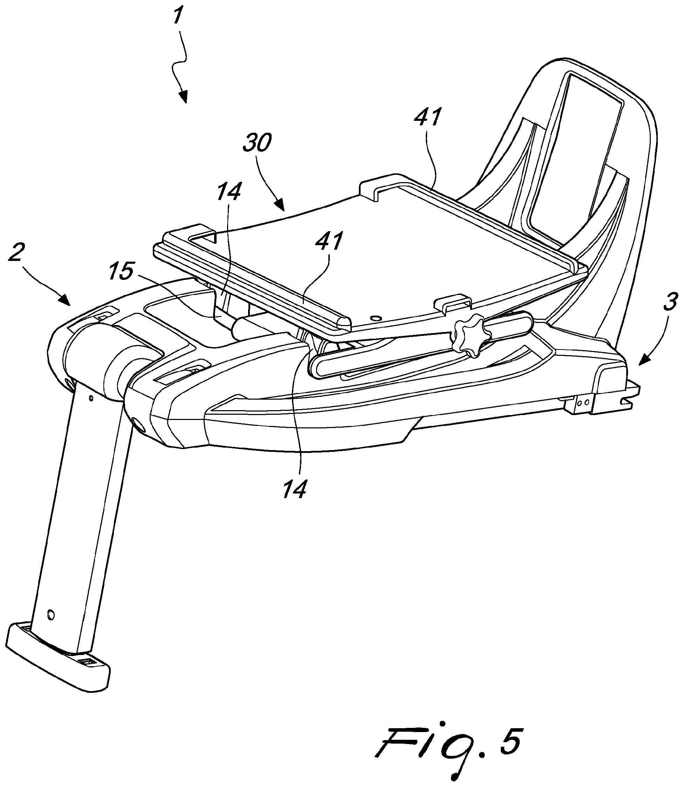

Figure 5 is a perspective view of the device according to the invention, and in particular of the car base coupled with the interface body;

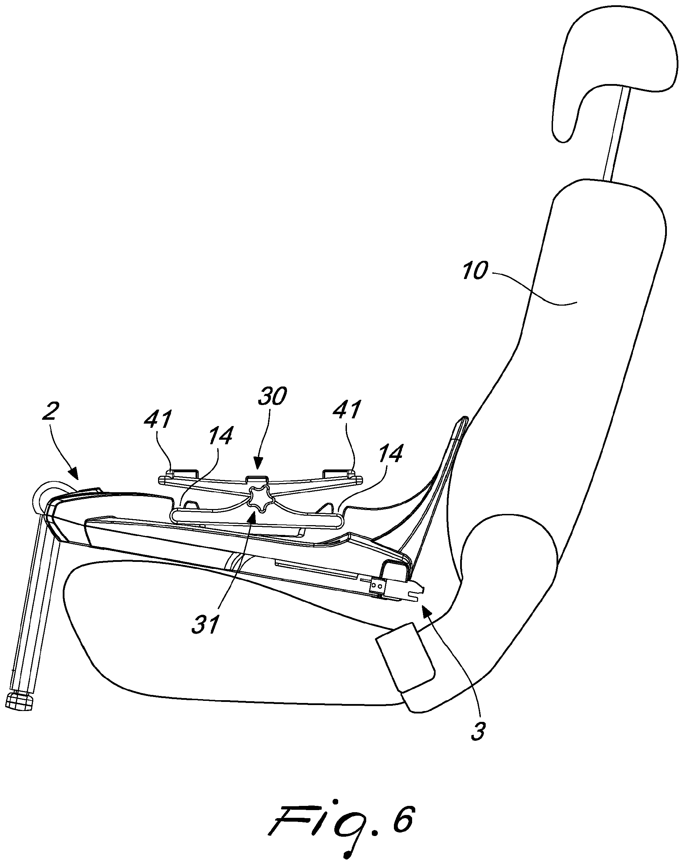

Figure 6 is a side view of a seat of a vehicle associated with the car base coupled with the interface body;

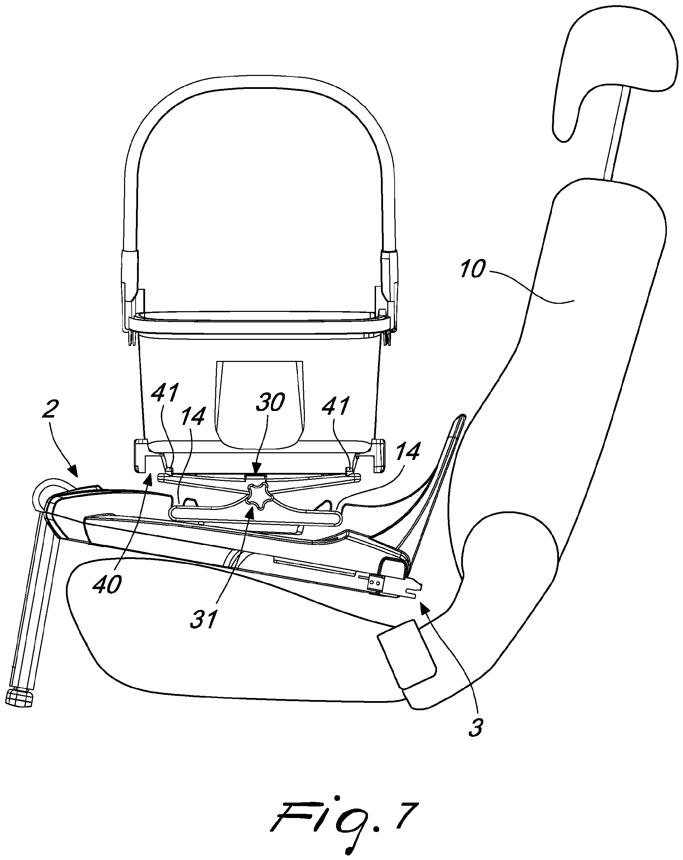

Figure 7 is a side view of a seat of a vehicle associated with the car base coupled with the interface body, which in turn is coupled to a carriage body;

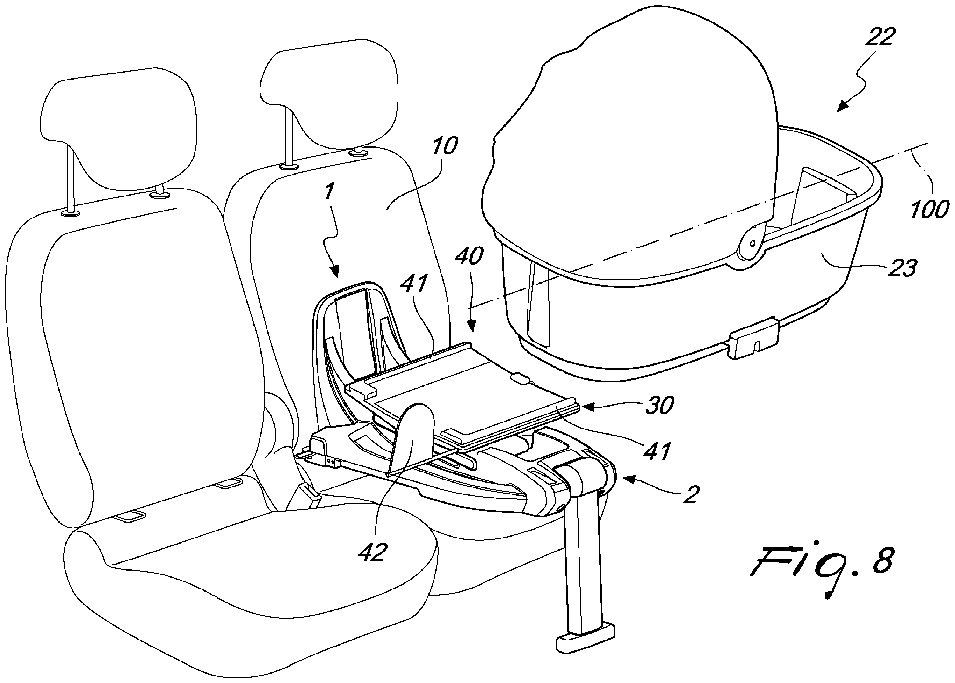

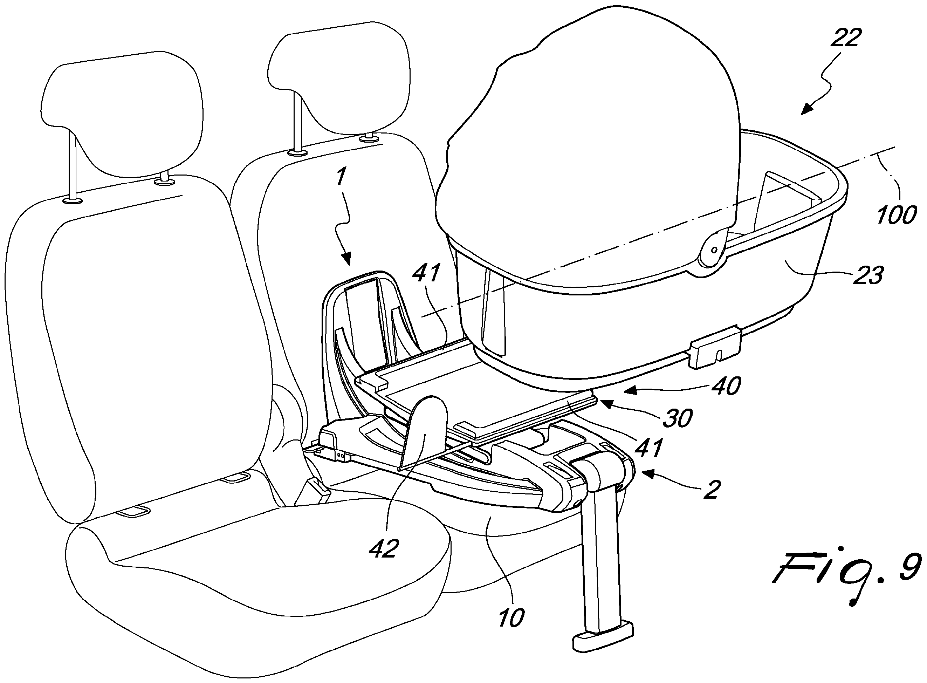

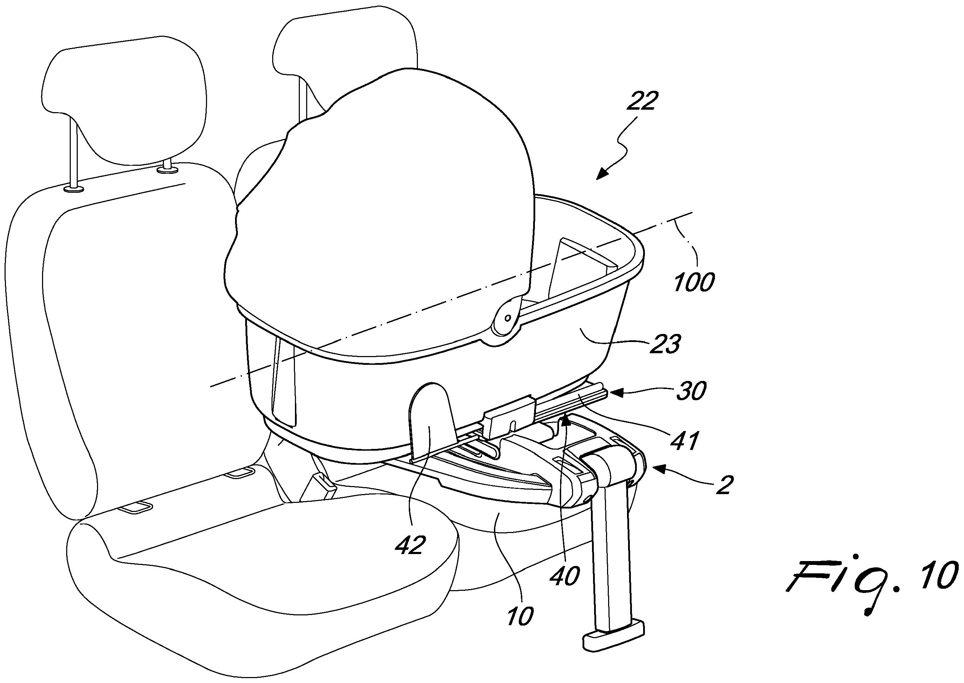

Figures 8 to 10 show, in perspective and in sequence, the steps of coupling the carriage body to the interface body.

With reference to the figures, the device for anchoring accommodations for children and/or infants to a seat of a vehicle according to the invention, generally designated by the reference numeral 1, comprises a car base 2 which can be associated detachably, via fixing means 3, with a seat 10 of a car.

With reference to the embodiment shown in the figures, the fixing means 3 comprise fixing tabs which are provided with automatic fastening terminals, for example of the type commercially known as ISO-FIX.

There is no reason why different fixing means cannot be used to fix the car base 2 to the seat, such as for example means that involve the use of the car safety belt.

The car base 2 comprises fastening/unfastening means 4 which comprise at least one hook 14 which is configured to engage with a respective first engagement element (not shown in the figures) supported by a first accommodation 20 for children and/or infants which comprises a seat element 21.

The seat element 21 can comprise a carrycot (as illustrated) or a child car seat for bigger children, fixed or reclining.

According to the present invention, the device 1 comprises an interface body 30 which can be associated detachably with the car base 2.

In particular coupling means 40 are provided between the interface body 30 and a second accommodation 22 for children and/or infants.

The second accommodation 22 comprises a cradle element 23, which extends along a longitudinal direction 100 and is configured to accommodate a child or an infant in a lying position.

The coupling means 40 comprise guide elements 41 with complementary shapes in order to provide a translation guide between the cradle element 23 and the interface body 30 which extends along a direction that is substantially parallel to the longitudinal direction 100 of the cradle element 23.

The device 1 further comprises locking/release means which act between the interface body 30 and the cradle element 23.

Conveniently, the coupling means 40 comprise at least two guide elements 41 which are arranged on opposite sides with respect to a main axis of extension of the interface body 30.

Advantageously, the interface body 30 is provided with adjustment means 31 adapted to adjust the relative position of the guide elements 41.

In particular, the adjustment means 31 make it possible to adjust the height of the relative position of the guide elements 41 and, more generally, to vary the inclination, about an oscillation axis, of the body supporting the guide elements 41.

This makes it possible, independently of the plane of arrangement of the seat 10, to arrange the guide elements 41 at the same height and, consequently, to keep the plane of arrangement of the cradle element 23 substantially flat.

Conveniently, the interface body 30 is or can be associated with an abutment body 42 which is intended to be arranged facing a portion of the external surface of the cradle element 23 arranged laterally with respect to the locking/release means, such portion being directed toward the front of the vehicle.

Preferably, the abutment body 42 is can be associated detachably with the interface body 30.

The interface body 30 can be associated detachably with the car base 2 by way of coupling of the at least one hook 14 defined on the car base 2 with a respective second engagement element 15 defined on the interface body 30.

According to a further aspect, the present invention relates to a car base 2 which can be associated detachably, via fixing means 3, with a seat 10 of a car.

The fixing means 3 comprise fixing tabs which are provided with automatic fastening terminals, for example of the type commercially known as ISO-FIX.

Different fixing means can be used to fix the car base 2 to the seat, such as for example means that involve the use of the car safety belt.

The car base 2 comprises fastening/unfastening means 4 which comprise at least one hook 14 which is configured to engage with a respective first engagement element (not shown in the figures) supported by a first accommodation 20 for children and/or infants which comprises a seat element 21.

The seat element 21 can comprise a carrycot (as illustrated) or a child car seat, fixed or reclining.

The car base 2 is provided with coupling means 40 with a second accommodation 22 for children and/or infants.

The second accommodation 22 comprises a cradle element 23, which extends along a longitudinal direction 100 and is configured to accommodate a child or an infant in a lying position.

The coupling means comprise guide elements with complementary shapes in order to provide a translation guide between the cradle element 23 and the car base 2 which extends along a direction that is substantially parallel to the longitudinal direction 100 of the cradle element 23.

The device 1 further comprises locking/release means which act between the car base 2 and the cradle element 23.

Conveniently, the coupling means 40 comprise at least two guide elements which are arranged on opposite sides with respect to a main axis of extension.

The coupling means 40 comprise adjustment means 31 adapted to adjust the relative position of the guide elements 41.

In particular, the adjustment means 31 make it possible to adjust the height of the relative position of the guide elements 41 and, more generally, to vary the inclination, about an oscillation axis, of the body supporting the guide elements 41.

This makes it possible, independently of the plane of arrangement of the seat 10, to arrange the guide elements 41 at the same height and, consequently, to keep the plane of arrangement of the cradle element 23 substantially flat.

According to a further embodiment, the car base 2 is or can be associated with an abutment body 42, which is intended to be arranged facing a portion of the external surface of the cradle element 23 arranged laterally with respect to the locking/release means, such portion being directed toward the front of the vehicle.

Preferably, the abutment body 42 can be associated detachably with the car base 2.

The use of the device for anchoring accommodations for children and/or infants to a seat of a vehicle, according to the invention, is the following.

If it is desired to use the car base 2 to hold a first accommodation 20, for example a carrycot 21 or a child car seat, then such first accommodation is coupled directly on the car base 2.

If on the other hand it is desired to use the car base 2 to hold a cradle element 23, then the interface body 30 is coupled to the car base 2, and this will make it possible to easily fasten/unfasten the cradle element 23 by way of a substantially horizontal translational movement.

In practice it has been found that the invention fully achieves the intended aim and objects by providing a device 1 for anchoring accommodations for children and/or infants to a seat of a vehicle that makes it possible, on the one hand, to render the fastening and the unfastening of the cradle element 23 to and from the car base 2 extremely easy, while on the other hand keeping a structure extremely simple and reliable, in that the car base 2 can be constituted in the traditional way, without altering mechanisms and without adding special components.

Furthermore, the ability to adjust the heights of the guide elements 41 makes it possible to arrange the bottom of the cradle element 23 to always be flat, thus ensuring superior comfort for the child or infant.

Finally, the presence of the abutment body 42 makes it possible to "lighten" the structure of the cradle element 23, in that the body 42 supports the flank of the cradle element 23, so absorbing part of the stresses that are created in the event of a frontal impact, which otherwise would all be absorbed by the cradle element 23, with consequent necessary stiffening thereof.

The fact that the abutment body 42 helps in the event of impact avoids needing to reinforce the flank of the cradle element 23 and makes it possible to keep the weight of that element down.

There is no reason why there cannot be two abutment bodies 42, one for each side of the interface body 30, or one removable body, in order to mount it on one side or the other, depending on the side of the car that the user decides to use.

The invention thus conceived is susceptible of numerous modifications and variations, as far as they are within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for anchoring accommodations for children and/or infants to a seat of a vehicle, which comprises a car base (2) configured to be associated detachably, by way of fixing means (3), with a seat (10) of a car, said car base (2) comprising fastening/unfastening means (4) which comprise at least one hook (14) which is configured to engage with a respective first engagement element supported by a first accommodation (20) for children and/or infants which comprises a seat element (21), **characterized in that** it comprises an interface body (30) which is configured to be associated detachably with said car base (2), coupling means (40) being provided between said interface body (30) and a second accommodation (22) for children and/or infants which comprises a cradle element (23) which extends along a longitudinal direction (100) and is configured to accommodate a child or an infant in a lying position, said coupling means (40) comprising guide elements (41) with complementary shapes in order to provide a translation guide between said cradle element (23) and said interface body (30) which extends along a direction that is substantially parallel to the longitudinal direction of said cradle element (23), locking/release means being further provided which act between said interface body (30) and said cradle element (23).

2. The device (1) according to claim 1, **characterized in that** said coupling means (40) comprise at least two guide elements (41) which are arranged on opposite sides with respect to a main axis of extension of the interface body (30).

3. The device (1) according to claim 1, **characterized in that** said interface body (30) is provided with adjustment means (31) adapted to adjust the relative position of the guide elements (41).

4. The device (1) according to one or more of the preceding claims, **characterized in that** said interface body (30) is configured to be associated with an abutment body (42) which extends facing a portion of the external surface of said cradle element (23) arranged laterally with respect to said locking/release means, said portion being directed toward the front of said vehicle.

5. The device (1) according to one or more of the preceding claims, **characterized in that** said abutment body (42) can be associated detachably with said interface body (30).

6. The device (1) according to one or more of the preceding claims, **characterized in that** an interface body (30) can be associated detachably with said car base (2) by way of coupling of said at least one hook (14) defined on said car base (2) with a respective second engagement element (15) defined on said interface body (30).

## Patentansprüche

1. Eine Vorrichtung (1) zur Verankerung von Aufnahmevorrichtungen für Kinder und/oder Kleinkinder an einem Sitz eines Fahrzeugs, die eine Wagenbasis (2) umfasst, ausgebildet, um mit Hilfe von Befestigungsmitteln (3) abnehmbar mit einem Sitz (10) eines Autos verbunden zu werden, wobei die Wagenbasis (2) Befestigungs-/Befestigungstrennmittel (4) umfasst, die mindestens einen Haken (14) umfassen, welcher ausgebildet ist, um mit einem entsprechenden ersten Eingriffselement in Eingriff zu stehen, das von einer ersten Aufnahmevorrichtung (20) für Kinder und/oder Kleinkinder getragen ist, welche ein Sitzelement (21) umfasst; **dadurch gekennzeichnet, dass** sie einen Schnittstellenkörper (30) umfasst, der ausgebildet ist, um abnehmbar mit der Wagenbasis (2) verbunden zu werden; wobei Kopplungsmittel (40) zwischen dem Schnittstellenkörper (30) und einer zweiten Aufnahmevorrichtung (22) für Kinder und/oder Kleinkinder bereitgestellt sind, welche ein Wiegenelement (23) umfasst, das sich in eine Längsrichtung (100) erstreckt und ausgebildet ist, um ein Kind oder ein Kleinkind in einer liegenden Position aufzunehmen; wobei die Kopplungsmittel (40) Führungselemente (41) mit komplementären Formen umfassen, um eine Translationsführung zwischen dem Wiegenelement (23) und dem Schnittstellenkörper (30) bereitzustellen, die sich in einer Richtung erstreckt, welche im Wesentlichen parallel zur Längsrichtung des Wiegenelements (23) ist; wobei weiter Blockier-/Lösemittel bereitgestellt sind, die zwischen dem Schnittstellenkörper (30) und dem Wiegenelement (23) arbeiten.

2. Die Vorrichtung (1) gemäß Anspruch 1, **dadurch gekennzeichnet, dass** die Kopplungsmittel (40) mindestens zwei Führungselemente (41) umfassen, welche, bezogen auf eine Haupt-Erstreckungsachse des Schnittstellenkörpers (30), auf gegenüberliegenden Seiten angeordnet sind.

3. Die Vorrichtung (1) gemäß Anspruch 1, **dadurch gekennzeichnet, dass** der Schnittstellenkörper (30) mit Einstellmitteln (31) ausgestattet ist, die ausgebildet sind, um die Relativposition der Führungselemente (41) anzupassen.

4. Die Vorrichtung (1) gemäß einem oder mehreren der obigen Ansprüche, **dadurch gekennzeichnet, dass** der Schnittstellenkörper (30) ausgebildet ist, um mit einem Widerlagerkörper (42) verbunden zu werden, der sich einem Abschnitt der externen Oberfläche des Wiegenelements (23) zugewandt erstreckt, seitlich mit Bezug auf die Blockier-/Lösemittel angeordnet, wobei der Abschnitt der Vorderseite des Fahrzeugs zugewandt ist.

5. Die Vorrichtung (1) gemäß einem oder mehreren der obigen Ansprüche, **dadurch gekennzeichnet, dass** der Widerlagerkörper (42) lösbar mit dem Schnittstellenkörper (30) verbunden werden kann.

6. Die Vorrichtung (1) gemäß einem oder mehreren der obigen Ansprüche, **dadurch gekennzeichnet, dass** durch Kopplung des mindestens einen an der Wagenbasis (2) bestimmten Hakens (14) mit einem entsprechenden an dem Schnittstellenkörper (30) bestimmten zweiten Eingriffselement (15) ein Schnittstellenkörper (30) lösbar mit der Wagenbasis (2) verbunden werden kann.

## Revendications

1. Dispositif (1) pour l'ancrage, sur un siège d'un véhicule, de logements pour enfants et/ou de nouveau-nés, qui comprend une base de voiture (2) configurée pour être associée de manière détachable, au moyen de moyens de fixation (3), à un siège (10) d'une voiture, ladite base de voiture (2) comprenant des moyens de fixation/détachement (4) qui comprennent au moins un crochet (14) qui est configuré pour se mettre en prise avec un premier élément de mise en prise respectif supporté par un premier logement (20) pour enfants et/ou nouveau-nés qui comprend un élément de siège (21), **caractérisé en ce qu'**il comprend un corps d'interface (30) qui est configuré pour être associé, de manière détachable, à ladite base de voiture (2), des moyens de couplage (40) étant prévus entre ledit corps d'interface (30) et un second logement (22) pour enfants et/ou nouveau-nés qui comprend un élément de berceau (23) qui s'étend le long d'une direction longitudinale (100) et est configuré pour loger un enfant ou un nouveau-né dans une position allongée, lesdits moyens de couplage (40) comprenant des éléments de guidage (41) avec des formes complémentaires afin de fournir un guide de translation entre ledit élément de berceau (23) et ledit corps d'interface (30) qui s'étend le long d'une direction qui est sensiblement parallèle à la direction longitudinale dudit élément de berceau (23), on prévoit en outre des moyens de blocage/déblocage, qui agissent entre ledit corps d'interface (30) et ledit élément de berceau (23).

2. Dispositif (1) selon la revendication 1, **caractérisé en ce que** lesdits moyens de couplage (40) comprennent au moins deux éléments de guidage (41) qui sont agencés sur les côtés opposés par rapport à un axe principal d'extension du corps d'interface (30).

3. Dispositif (1) selon la revendication 1, **caractérisé en ce que** ledit corps d'interface (30) est prévu avec des moyens de réglage (31) adaptés pour régler la position relative des éléments de guidage (41).

4. Dispositif (1) selon une ou plusieurs des revendications précédentes, **caractérisé en ce que** ledit corps d'interface (30) est configuré pour être associé à un corps de butée (42) qui s'étend en face d'une partie de la surface externe dudit élément de berceau (23) agencé latéralement par rapport auxdits moyens de blocage/déblocage, ladite partie étant dirigée vers l'avant dudit véhicule.

5. Dispositif (1) selon une ou plusieurs des revendications précédentes, **caractérisé en ce que** ledit corps de butée (42) peut être associé de manière détachable avec ledit corps d'interface (30).

6. Dispositif (1) selon une ou plusieurs des revendications précédentes, **caractérisé en ce qu'**un corps d'interface (30) peut être associé de manière détachable à ladite base de voiture (2) au moyen du couplage dudit au moins un crochet (14) défini sur ladite base de voiture (2) avec un second élément de mise en prise (15) respectif défini sur ledit corps d'interface (30).
